# EUROPEAN PATENT APPLICATION

(11) **EP 4 793 796 A1**
(43) Date of publication of application: **19.08.2026**
(21) Application number: 23955409.0
(22) Date of filing: 10.10.2023
(51) Int. Cl.: G06F 16/9032, G06F 16/90

(54) **INFORMATION PROCESSING PROGRAM, METHOD, AND DEVICE**

(71) Applicant: FUJITSU LIMITED, Kawasaki-shi, Kanagawa 211-8588 (JP)
(72) Inventor: FUKUDA, Takasaburo, Kawasaki-shi, Kanagawa 211-8588 (JP); TOKUMOTO, Susumu, Kawasaki-shi, Kanagawa 211-8588 (JP)
(74) Representative: Hoffmann Eitle
(86) International application number: PCT/JP2023/036805
(87) International publication number: WO 2025/079157

(57) **Abstract**

An information processing apparatus converts table data in which plural elements is represented in a table format into data in a format in which each of the plural elements is distinguishable as a header or a value, inputs the converted data to a large language model (LLM) to cause the LLM to execute inference processing on the converted data.

## Description

### FIELD

The disclosed technology relates to an information processing program, an information processing method, and an information processing apparatus.

### BACKGROUND

Since the emergence of the Large Language Model (LLM) in 2018, research and development of language processing have been mainly conducted on LLM, and various applications such as a Chat Generative Pre-trained Transformer (ChatGPT) utilizing LLM have become widespread. LLM is good at question response to natural language input and sentence generation. Not only natural language sentences but also tabular data are input to the LLM.

For example, research has been conducted for the purpose of understanding how well LLMs can perform table-related tasks in few-shot in-context learning. In this study, an inference test using the following three methods is performed on data in CSV format. The first method is a method of giving table data and asking a question as it is, the second method is a method of inferring stepwise in the form of Chain of Thought (CoT), and the third method is a method of inferring in the form of Self-Consistency (CoT + SC, inference from multiple trials). In this study, it has been confirmed that the CoT + SC method has the highest accuracy.

### Citation List

### Non Patent Document

Non Patent Document 1: Wenhu Chen, "Large Language Models are few(1)-shot Table Reasoners," arXiv:2210.06710, 13 Oct 2022.

### SUMMARY OF INVENTION

### Technical Problem

As described above, LLM is good at question response and sentence generation for natural language input, but there is still room for accuracy improvement in inference processing such as semantic analysis and response generation for tabular data.

As one aspect, an object of the disclosed technology is to improve inference accuracy in a large language model for tabular data.

### Solution to Problem

As one aspect, the disclosed technology converts table data in which a plurality of elements are represented in a table format into data in a format in which each of the plurality of elements is distinguishable as a header or a value. Then, the disclosed technology inputs the converted data to a large language model to cause the large language model to execute inference processing on the converted data.

### Advantageous Effects of Invention

As one aspect, there is an effect that inference accuracy in a large language model for tabular data can be improved.

### BRIEF DESCRIPTION OF DRAWINGS

Fig. 1 is a diagram illustrating an example of table data.
Fig. 2 is a diagram illustrating an example of outputs of CSV data and ChatGPT obtained by converting table data.
Fig. 3 is a diagram for describing inference in LLM for CSV data.
Fig. 4 is a diagram for describing a case in which table data is converted into a format in which a header and a value are distinguishable and inference is performed by LLM.
Fig. 5 is a functional block diagram of an information processing apparatus according to a first embodiment.
Fig. 6 is a diagram for describing determination of a type of a specific format for converting table data.
Fig. 7 is a diagram illustrating an example of an inference result.
Fig. 8 is a block diagram illustrating an example of a schematic configuration of a computer functioning as the information processing apparatus.
Fig. 9 is a flowchart illustrating an example of an information processing routine.
Fig. 10 is a functional block diagram of an information processing apparatus according to a second embodiment.
Fig. 11 is a diagram illustrating an example of an experimental result.
Fig. 12 is a diagram illustrating an example of an experimental result.
Fig. 13 is a diagram illustrating an example of an experimental result.
Fig. 14 is a diagram illustrating an example of an experimental result.
Fig. 15 is a diagram illustrating an example of an experimental result.

### DESCRIPTION OF EMBODIMENTS

Hereinafter, an example of an embodiment according to the disclosed technology will be described with reference to the drawings.

In the present embodiment, data (hereinafter, referred to as "table data") in which a plurality of elements is represented in a table format is input to the LLM, and inference processing is executed. The table data in the present embodiment is, for example, a software design document, a payment report, or the like, and includes a sentence partially including a table.

Here, problems in causing LLM to understand table data will be described.

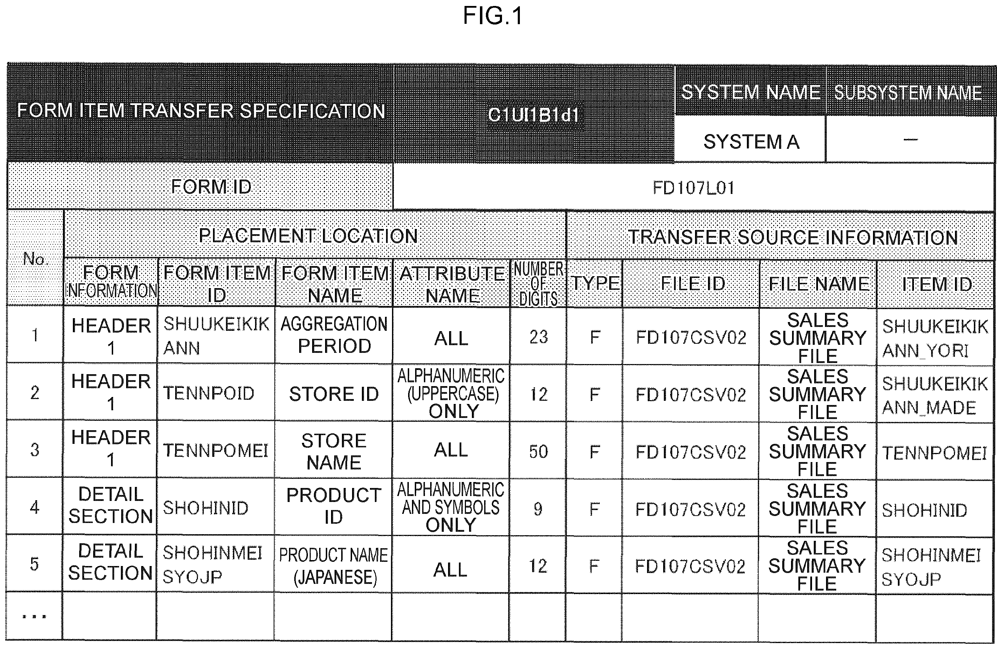

For example, in a software design document created by spreadsheet software such as Excel, as illustrated in Fig. 1, not only a simple table expression but also a large number of portions where a pair of a header (column name) and a value is associated with left and right or upper and lower cells exist. Note that the simple table expression is a table in which a header is associated with an upper row or a left column and a value corresponding to the header is assigned to each of the other rows or columns.

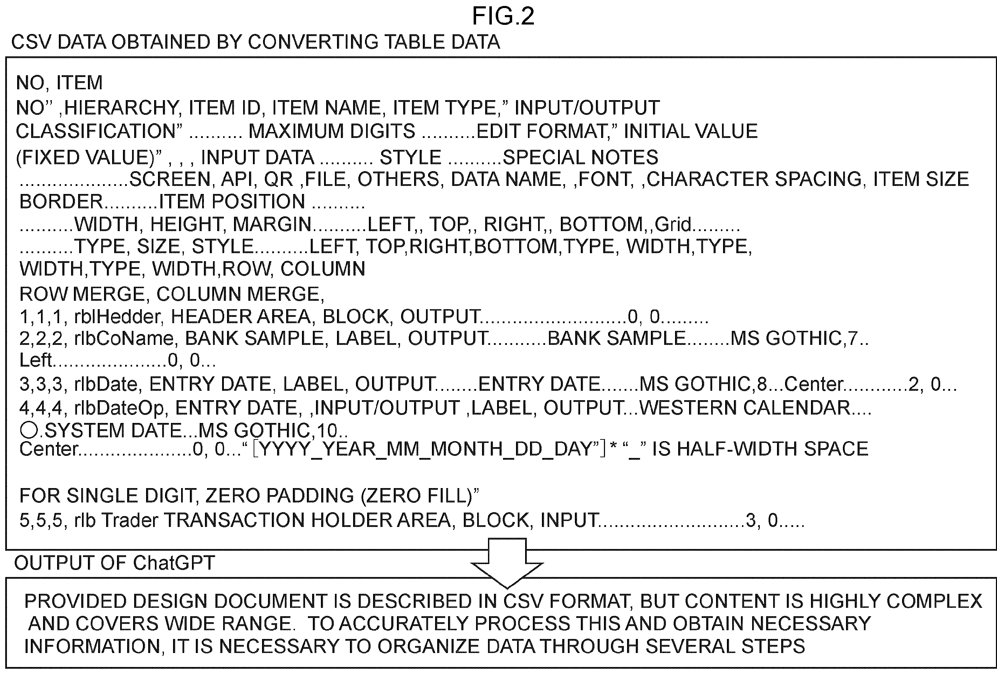

In a case in which such table data is converted into Comma Separated Values (CSV) format, as illustrated in the upper diagram of Fig. 2, Ill-formatted data, that is, data in a format with a bad shape is often obtained. In a case in which such CSV data is recognized by LLM, the ability of LLM to understand the table data represented by the CSV data is significantly deteriorated. For example, in a case in which CSV data illustrated in the upper diagram of Fig. 2 is input, it is difficult to understand the content of table data in ChatGPT, and the output of ChatGPT is as illustrated in the lower diagram of Fig. 2.

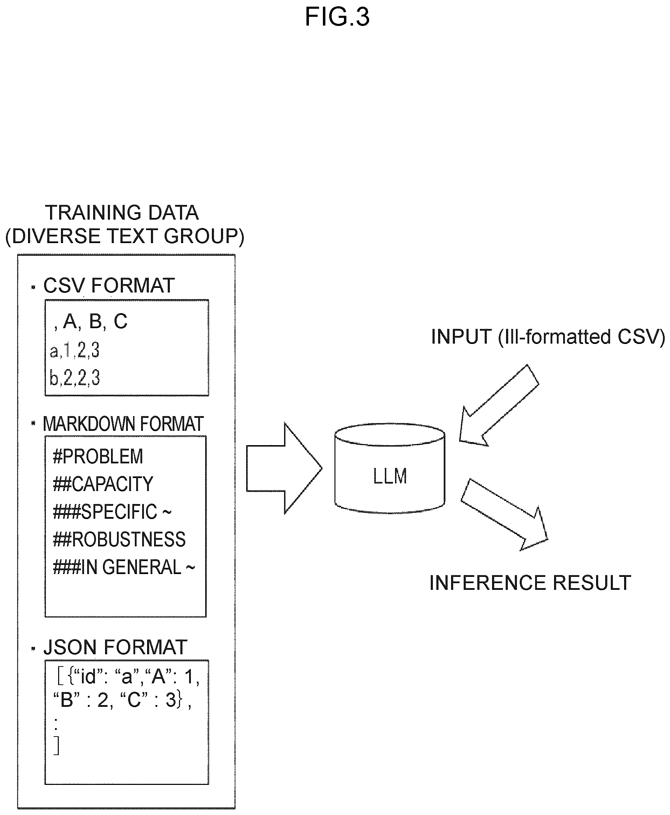

As illustrated in Fig. 3, when Ill-formatted CSV data is input to an LLM constructed by using text groups in various formats as training data, inference is performed in the CSV format in the LLM. That is, since the CSV data used for the LLM training does not include information for distinguishing between the header and the value, when inference is performed in the CSV format, there is a high possibility that the LLM advances understanding without knowing which element is the header and which element is the value. Thus, the inference result output from the LLM has low accuracy.

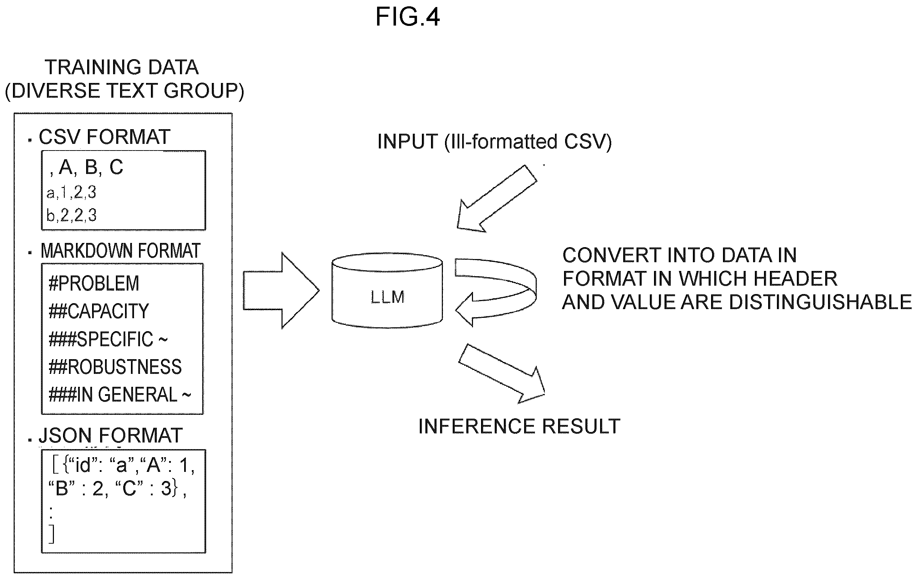

Accordingly, in each of the following embodiments, as illustrated in Fig. 4, the table data is converted into data in a format in which the relationship between the header and the value is obvious and which is easily inferred by LLM, that is, a format in which the header and the value are distinguishable (hereinafter, referred to as "specific format"), and then the inference by LLM is executed. Hereinafter, an information processing apparatus according to each embodiment will be described in detail.

### <First Embodiment>

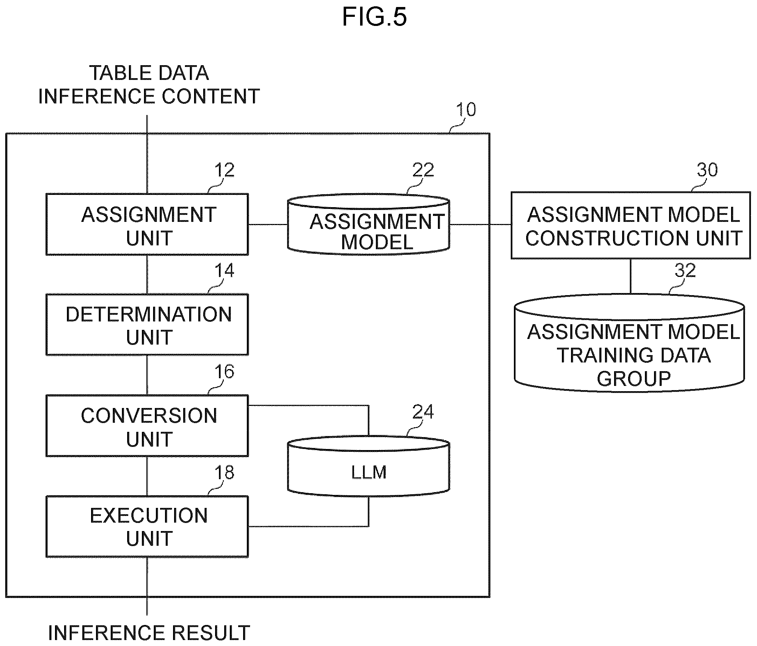

As illustrated in Fig. 5, table data and inference content are input to an information processing apparatus 10. The table data is data in which a plurality of elements are represented in a table format, and is, for example, a software design document as illustrated in Fig. 1, a company's financial report, or the like. The inference content is a question or the like indicating an inference desired to be performed by an LLM 24 with respect to the content of the table data. The inference content is, for example, "What is the processing after calling WEB API with callApi?" or the like. The LLM 24 analyzes the content of the table data, infers an answer to the question, and outputs an inference result. In the present embodiment, as the LLM 24 used for inference, an existing one such as a GPT series used in ChatGPT is applied.

As illustrated in Fig. 5, the information processing apparatus 10 according to the first embodiment functionally includes an assignment unit 12, a determination unit 14, a conversion unit 16, and an execution unit 18. An assignment model 22 and the LLM 24 are stored in a predetermined storage area of the information processing apparatus 10. The determination unit 14 and the conversion unit 16 are an example of a conversion unit of the disclosed technology.

The assignment unit 12 assigns information indicating whether the element is a header or a value to each of the plurality of elements included in the table data. In the present embodiment, for example, a header or a value included in each cell of table data, that is, each of the headers or values separated by a comma when the table data is converted into CSV data, is referred to as one element.

Specifically, the assignment unit 12 converts the table data into CSV data, and tags each element included in the CSV data with information of a header likelihood or a value likelihood using the assignment model 22. The assignment model 22 is a machine learning model constructed by an assignment model construction unit 30 executing machine learning using an assignment model training data group 32. Each training data included in the assignment model training data group 32 is data in which an element and a correct answer label indicating whether the element is a header or a value are paired.

For example, the assignment model construction unit 30 defines an objective variable y indicating the header likelihood by a multiple regression equation as described below. $y = ax 1 + bx 2 + cx 3 + …$ xi (i = 1, 2, 3, ...) is an explanatory variable, and is a variable that becomes higher as an element has a characteristic like a header. For example, x1 may be x1 = (number of types + 1 - order)/number of types for the character size included in the table data, and may be a variable that increases as the character size of the element increases. The number of types is the number of types of character sizes included in the table data. The order is set as first, second, ... in descending order of character size. For example, x2 may be the reciprocal of the number of characters of the element. As xi, an explanatory variable related to arrangement of elements in the table data, an explanatory variable indicating whether or not a predetermined word is used as a word that is easily used for a header, or the like may be applied. In addition, a, b, c, ... are weights of the explanatory variables.

The assignment model construction unit 30 calculates weights a, b, c, ... of the multiple regression equation by multiple regression analysis with y = 1 when the correct answer label of each training data included in the assignment model training data group 32 is "header" and y = 0 when the correct answer label is "value". The assignment model construction unit 30 provides the multiple regression equation to which the calculated weight is applied to the information processing apparatus 10 as the assignment model 22.

Note that the assignment model construction unit 30 and the assignment model training data group 32 that construct the assignment model 22 may be included in the information processing apparatus 10 or may be included in an external apparatus different from the information processing apparatus 10. In the latter case, the assignment model 22 constructed by the external apparatus may be read into the information processing apparatus 10.

In a case in which the multiple regression equation as described above is used as the assignment model 22, when a value obtained by inputting each element included in the CSV data obtained by converting the table data to the assignment model 22 is equal to or greater than a predetermined threshold TH1, the assignment unit 12 tags the element as "header". On the other hand, when the value obtained by inputting the element to the assignment model 22 is less than the threshold TH1, the assignment unit 12 tags the element as "value".

In this manner, by assigning information indicating whether the element is a header or a value to each element included in the table data, it is possible to improve recognition power between the header and the value in the LLM 24 and to improve the accuracy in the case of converting the table data into a markdown format or a JSON format (details will be described later).

The determination unit 14 determines a type of a specific format in a case in which the table data is converted into data of a format in which each of the plurality of elements is distinguishable as a header or a value, that is, a specific format. By determining the type of the specific format in this manner, conversion into the specific format in which the LLM 24 can easily understand the content can be performed according to the original table data.

Examples of the specific format include the markdown format, the JSON format, and the like. Since the markdown format is often used for description in a natural sentence, inference accuracy in table data having many elements of the natural sentence is improved when inference is performed on the basis of such training data. On the other hand, since the JSON format is often used for description in a symbolic expression such as a program, in a case in which inference is performed on the basis of such training data, inference accuracy in table data having a large amount of information of the symbolic expression is improved.

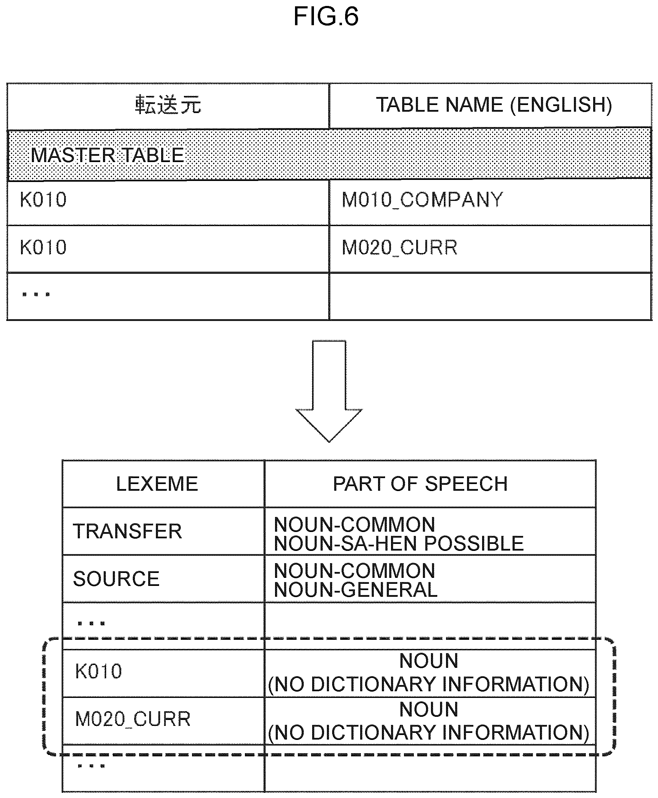

Specifically, the determination unit 14 determines the type of the specific format for converting the table data on the basis of at least one of a ratio in which the elements of the natural sentence are included and a ratio in which the elements of the symbolic expression are included among the plurality of elements included in the CSV data obtained by converting the table data. More specifically, the determination unit 14 performs morphological analysis on the CSV data obtained by converting the table data, thereby assigning part of speech information to each lexeme included in the CSV data. For example, an example in which CSV data obtained by converting table data as illustrated in the upper diagram of Fig. 6 is morphologically analyzed and part of speech information is assigned to each lexeme is illustrated in the lower diagram of Fig. 6.

Then, when the ratio of the lexeme to which predetermined part of speech information is assigned as the part of speech information indicating the symbolic expression is less than a predetermined threshold TH2, the determination unit 14 determines the table data as table data having many elements of the natural sentence, and determines the specific format to be converted as the markdown format. On the other hand, when the ratio of the lexeme to which predetermined part of speech information is assigned as the part of speech information indicating the symbolic expression is equal to or greater than the threshold TH2, the determination unit 14 determines the table data as table data having many elements of the symbolic expression, and determines the format to be converted as the JSON format.

The part of speech information indicating the symbolic expression may be, for example, "symbol", "character", "noun (without dictionary information)", or the like. The "noun (without dictionary information)" is a part of speech of a lexeme that is not registered in a dictionary used for morphological analysis but is determined to be a noun. In the example illustrated in the lower diagram of Fig. 6, the determination unit 14 calculates a ratio of lexemes to which a part of speech indicating symbolic expression is assigned, such as lexemes indicated by broken lines, among the total number of words, and compares the calculated ratio with the threshold TH2 to determine the type of the specific format to be converted.

The conversion unit 16 converts the table data into data in the specific format determined by the determination unit 14. Specifically, the conversion unit 16 generates a prompt (hereinafter, referred to as a "conversion prompt") for converting the format of the data into the specific format determined by the determination unit 14. For example, the conversion unit 16 generates a question such as "Please rewrite the following CSV data into the markdown format." and generates a conversion prompt by making the question in a format that can be easily understood by the LLM 24 by general prompting processing. The conversion unit 16 inputs CSV data obtained by converting the table data and the generated conversion prompt to the LLM 24, and acquires data converted into the determined specific format as an output of the LLM 24.

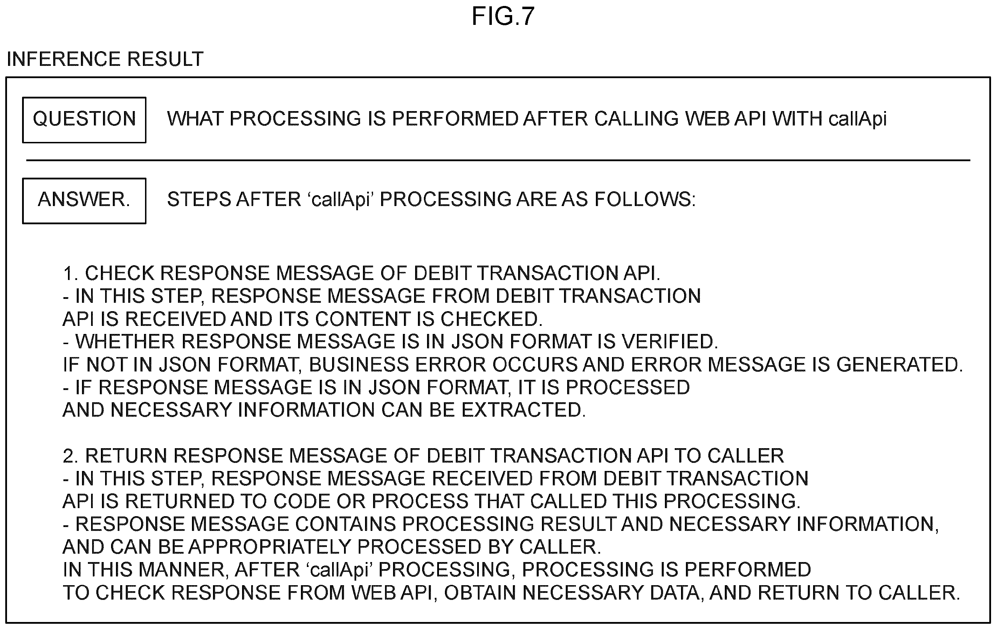

The execution unit 18 inputs the data converted by the conversion unit 16 to the LLM 24, and causes the LLM 24 to execute inference processing on the data converted. Specifically, the execution unit 18 generates a prompt (hereinafter, referred to as an "inference prompt") for executing inference by making the inference content input to the information processing apparatus 10 in a format that is easy for the LLM 24 to understand by general prompting processing. The execution unit 18 inputs CSV data obtained by converting the table data and the generated inference prompt to the LLM 24, and acquires, for example, an inference result as illustrated in Fig. 7 as an output of the LLM 24.

The CSV data does not include information for distinguishing between the header and the value. On the other hand, for the training data in the markdown format or the JSON format, which element is a header and which element is a value is obvious at the training stage of the LLM 24. Based on such training data, at the time of inference, the LLM 24 can perform inference while firmly understanding the distinction between the header and the value.

Note that Few-Shot Prompting may be applied to the flow from the processing of the conversion unit 16 to the processing of the execution unit 18.

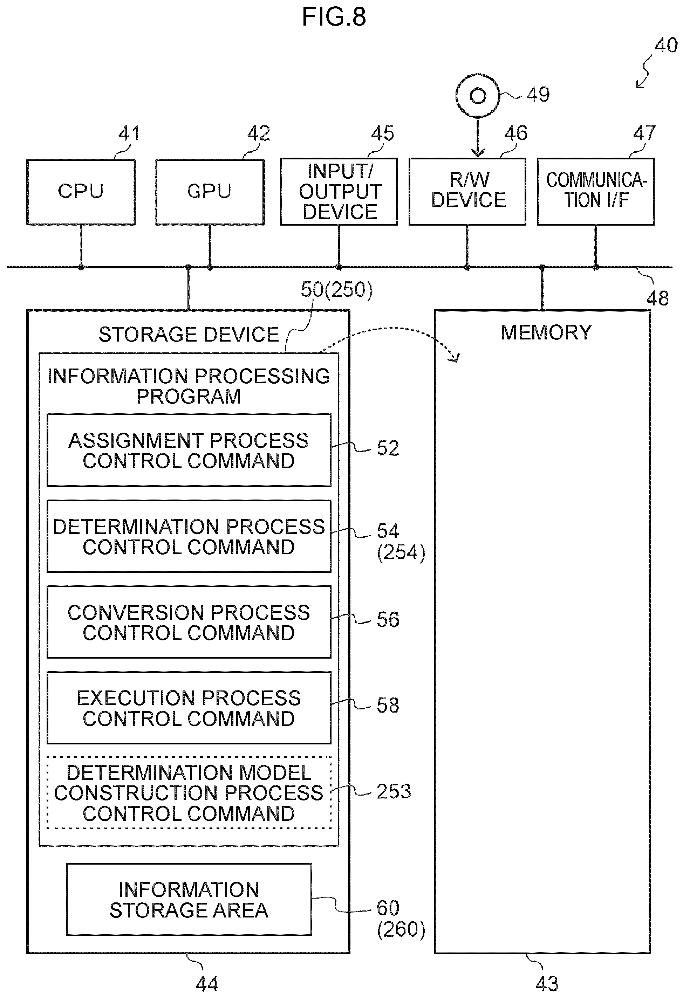

The information processing apparatus 10 may be implemented by, for example, a computer 40 illustrated in Fig. 8. The computer 40 includes a central processing unit (CPU) 41, a graphics processing unit (GPU) 42, a memory 43 as a temporary storage area, and a nonvolatile storage device 44. The computer 40 includes an input/output device 45 such as an input device and a display device, and a read/write (R/W) device 46 that controls reading and writing of data with respect to the storage medium 49. The computer 40 further includes a communication interface (I/F) 47 connected to a network such as the Internet. The CPU 41, the GPU 42, the memory 43, the storage device 44, the input/output device 45, the R/W device 46, and the communication I/F 47 are connected to each other via a bus 48.

The storage device 44 is, for example, a hard disk drive (HDD), a solid state drive (SSD), a flash memory, or the like. The storage device 44 as a storage medium stores an information processing program 50 for causing the computer 40 to function as the information processing apparatus 10. The information processing program 50 includes an assignment process control command 52, a determination process control command 54, a conversion process control command 56, and an execution process control command 58. The storage device 44 includes an information storage area 60 in which information constituting each of the assignment model 22 and the LLM 24 is stored.

The CPU 41 reads the information processing program 50 from the storage device 44, loads the program in the memory 43, and sequentially executes the control commands included in the information processing program 50. The CPU 41 operates as the assignment unit 12 illustrated in Fig. 5 by executing the assignment process control command 52. The CPU 41 operates as the determination unit 14 illustrated in Fig. 5 by executing the determination process control command 54. The CPU 41 operates as the conversion unit 16 illustrated in Fig. 5 by executing the conversion process control command 56. The CPU 41 operates as the execution unit 18 illustrated in Fig. 5 by executing the execution process control command 58. The CPU 41 reads information from the information storage area 60 and loads each of the assignment model 22 and the LLM 24 into the memory 43. Thus, the computer 40 that has executed the information processing program 50 functions as the information processing apparatus 10. The CPU 41 that executes the program is hardware. A part of the program may be executed by the GPU 42.

Functions implemented by the information processing program 50 may be implemented by, for example, a semiconductor integrated circuit, more specifically, an application specific integrated circuit (ASIC), a field-programmable gate array (FPGA), or the like.

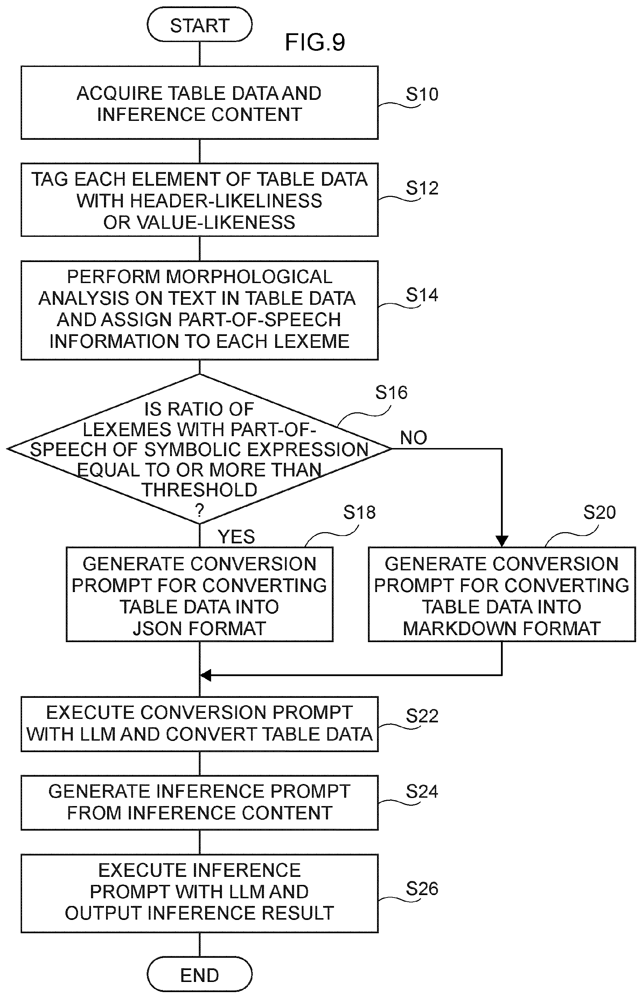

Next, an operation of the information processing apparatus 10 according to the first embodiment will be described. The assignment model construction unit 30 constructs the assignment model 22 by executing machine learning using the assignment model training data group 32 and provides the assignment model 22 to the information processing apparatus 10. An LLM construction unit (not illustrated) constructs the LLM 24 by executing machine learning using training data that is a text group of various formats, and provides the LLM to the information processing apparatus 10. Then, when the table data and the inference content are input to the information processing apparatus 10 and execution of the inference processing is instructed, the information processing apparatus 10 executes the information processing routine illustrated in Fig. 9. Note that the information processing routine is an example of an information processing method of the disclosed technology.

In step S10, the assignment unit 12 acquires the table data and the inference content input to the information processing apparatus 10. Next, in step S12, the assignment unit 12 converts the table data into CSV data, and tags each element included in the CSV data with information of a header likelihood or a value likelihood using the assignment model 22.

Next, in step S14, the determination unit 14 morphologically analyzes the CSV data obtained by converting the table data, thereby assigning part of speech information to each of the lexemes included in the CSV data. Next, in step S16, the determination unit 14 determines whether or not the ratio of the lexemes to which the predetermined part of speech information as the part of speech information indicating the symbolic expression is assigned among respective pieces of the part of speech information assigned to the elements of the table data is equal to or larger than the threshold TH2. In a case in which the ratio is equal to or more than the threshold TH2, the process proceeds to step S18, and in a case in which the ratio is less than the threshold TH2, the process proceeds to step S20.

In step S18, the determination unit 14 determines that the table data has many elements of symbolic expression, and determines the specific format to be converted as the JSON format. Then, the conversion unit 16 generates a conversion prompt for converting the table data into data in the JSON format. On the other hand, in step S20, the determination unit 14 determines that the table data has many elements of the natural sentence and determines the specific format to be converted as the markdown format. Then, the conversion unit 16 generates a conversion prompt for converting the table data into data in the markdown format.

Next, in step S22, the conversion unit 16 inputs CSV data obtained by converting the table data and the conversion prompt generated in step S18 or S20 to the LLM 24, and acquires data converted into the determined specific format as an output of the LLM 24.

Next, in step S24, the execution unit 18 generates an inference prompt by making the inference content acquired in step S10 described above in a format that can be easily understood by the LLM 24 by general prompting processing. Next, in step S26, the execution unit 18 inputs CSV data obtained by converting the table data and the inference prompt generated in step S24 to the LLM 24, and acquires an inference result as an output of the LLM 24. Then, the execution unit 18 outputs the acquired inference result, and the information processing routine is terminated.

As described above, the information processing apparatus according to the first embodiment converts table data in which a plurality of elements is represented in a table format into data in a format in which each of the plurality of elements is distinguishable as a header or a value. Then, the information processing apparatus inputs the converted data to the large language model, and causes the large language model to execute inference processing on the converted data. Thus, the inference accuracy in the large language model for tabular data can be improved. Therefore, it is possible to develop an LLM utilization method capable of causing LLM to understand a sentence including a table and providing accurate information for a question or a request from a user.

### <Second Embodiment>

Next, a second embodiment will be described. Note that, in the information processing apparatus according to the second embodiment, components similar to those of the information processing apparatus 10 according to the first embodiment are denoted by the same reference numerals, and detailed description thereof will be omitted.

In the second embodiment, it is assumed that the training data used for constructing the LLM 24 is obvious. In the second embodiment, a case in which a specific format for converting table data is determined on the basis of the training data will be described.

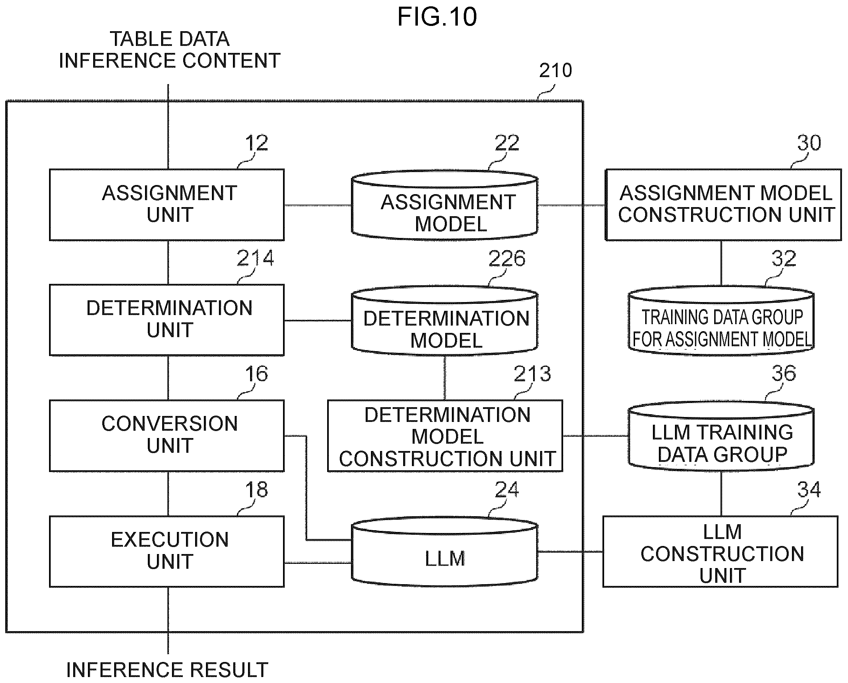

As illustrated in Fig. 10, the information processing apparatus 210 according to the second embodiment functionally includes an assignment unit 12, a determination model construction unit 213, a determination unit 214, a conversion unit 16, and an execution unit 18. The assignment model 22, the LLM 24, and the determination model 226 are stored in a predetermined storage area of the information processing apparatus 210.

The determination model construction unit 213 constructs the appearance distribution of the word in the LLM training data group 36 used for constructing the LLM 24 by the LLM construction unit 34 as the determination model 226 for each type of a specific format for converting the table data. For example, the determination model construction unit 213 creates an appearance distribution of a word in the training data in the CSV format, an appearance distribution of a word in the training data in the markdown format, an appearance distribution of a word in the training data in the JSON format, and the like. Then, the determination model construction unit 213 collectively constructs the appearance distribution of the words for each type as the determination model 226. The appearance distribution of the word may be, for example, a histogram of the number of appearances of each word appearing in the LLM training data group 36 and a vector representing the histogram.

The determination unit 214 determines the type of the specific format for converting the table data on the basis of the comparison between the appearance distribution of the word in the table data and the determination model 226. Specifically, the determination unit 214 creates the appearance distribution of the word for the table data, similarly to the processing of the determination model construction unit 213. Then, the determination unit 214 determines the type corresponding to the appearance distribution most similar to the appearance distribution of the word in the table data among the appearance distributions of the word for each type of the specific format stored as the determination model 226 as the type of the specific format for converting the table data.

The information processing apparatus 210 may be realized by, for example, a computer 40 illustrated in Fig. 8. The storage device 44 of the computer 40 stores an information processing program 250 for causing the computer 40 to function as the information processing apparatus 210. The information processing program 250 includes an assignment process control command 52, a determination model construction process control command 253, a determination process control command 254, a conversion process control command 56, and an execution process control command 58. The storage device 44 includes an information storage area 260 in which information constituting each of the assignment model 22, the LLM 24, and the determination model 226 is stored.

The CPU 41 reads the information processing program 250 from the storage device 44, loads the program in the memory 43, and sequentially executes the control commands included in the information processing program 250. The CPU 41 operates as the determination model construction unit 213 illustrated in Fig. 10 by executing the determination model construction process control command 253. The CPU 41 operates as the determination unit 214 illustrated in Fig. 10 by executing the determination process control command 254. The CPU 41 reads information from the information storage area 260 and loads each of the assignment model 22, the LLM 24, and the determination model 226 in the memory 43. The other control commands are similar to those of the information processing program 50 according to the first embodiment. Thus, the computer 40 that has executed the information processing program 250 functions as the information processing apparatus 210.

Functions implemented by the information processing program 250 may be implemented by, for example, a semiconductor integrated circuit, more specifically, an application specific integrated circuit (ASIC), a field-programmable gate array (FPGA), or the like.

Next, an operation of the information processing apparatus 210 according to the second embodiment will be described. The assignment model construction unit 30 constructs the assignment model 22 and provides it to the information processing apparatus 210. The LLM construction unit 34 constructs the LLM 24 and provides the constructed LLM to the information processing apparatus 210. The determination model construction unit 213 constructs the appearance distribution of the word in the LLM training data group 36 used for constructing the LLM 24 by the LLM construction unit 34 as the determination model 226 for each type of a specific format for converting the table data. Then, when the table data and the inference content are input to the information processing apparatus 210 and execution of the inference processing is instructed, the information processing apparatus 210 executes the information processing routine illustrated in Fig. 9.

In the second embodiment, in steps S14 to S20, the determination unit 214 determines the type of the specific format for converting the table data on the basis of the comparison between the appearance distribution of the word in the table data and the determination model 226. Then, the conversion unit 16 generates a conversion prompt for converting the table data into data of the determined specific format.

As described above, in the information processing apparatus according to the second embodiment, the appearance distribution of the word in the training data used for constructing the LLM is created in advance for each type of the specific format for converting the table data. Then, the information processing apparatus determines the type of the specific format for converting the table data on the basis of a comparison between the appearance distribution of the word in the table data and the appearance distribution of the word for each type. As described above, in a case in which the training data used for constructing the LLM is obvious, it is possible to determine the type of the specific format that is easy to understand in the LLM according to the original table data on the basis of the appearance distribution of the word.

Here, a result of an experiment using an existing LLM will be described.

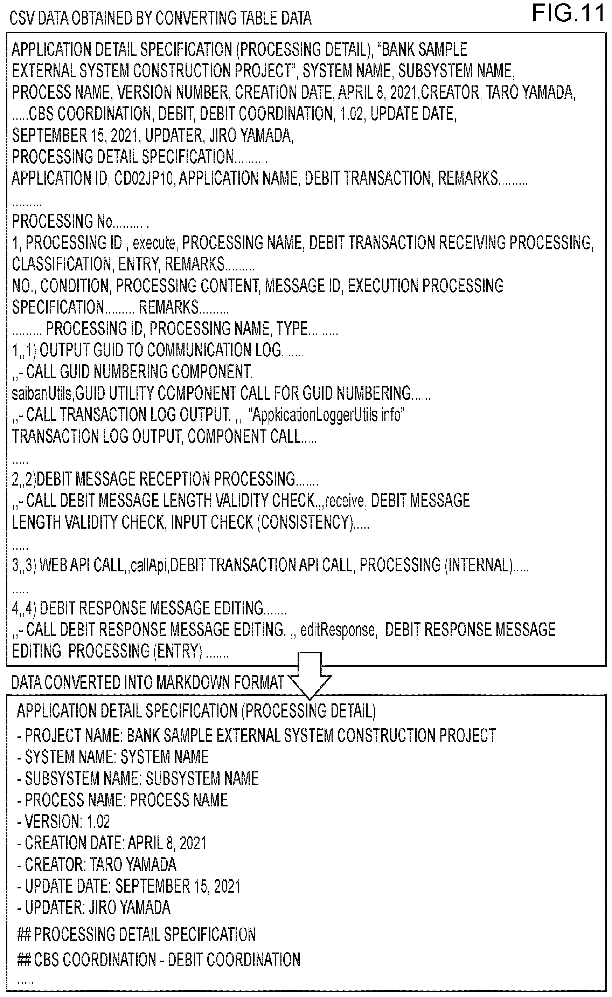

Fig. 11 illustrates an example of CSV data obtained by converting table data having a large amount of natural sentence information, and data obtained by converting the CSV data into a markdown format by LLM. In this case, the table data has been properly converted into a markdown format. Then, for example, the output of LLM for the question "What is the process after calling WEB API with callApi?" is as illustrated in Fig. 7, and the correct answer for the question is output.

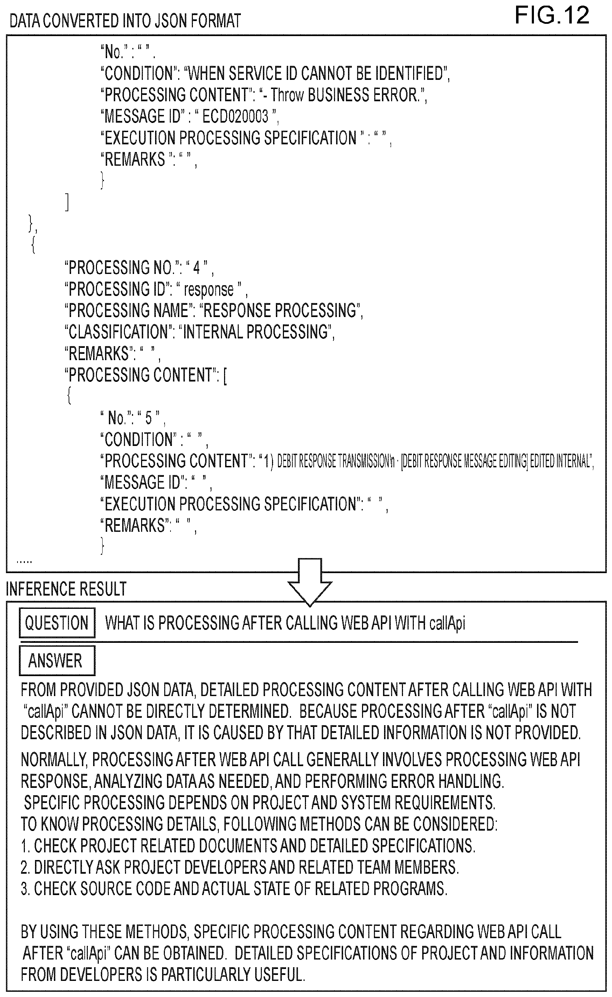

On the other hand, similarly to the upper diagram of Fig. 11, Fig. 12 illustrates an example of data obtained by converting CSV data obtained by converting table data containing a large amount of natural sentence information into JSON format by LLM. In this case, the data converted into the JSON format is an inappropriate hierarchical expression, and the LLM inference result is not an appropriate answer to the question.

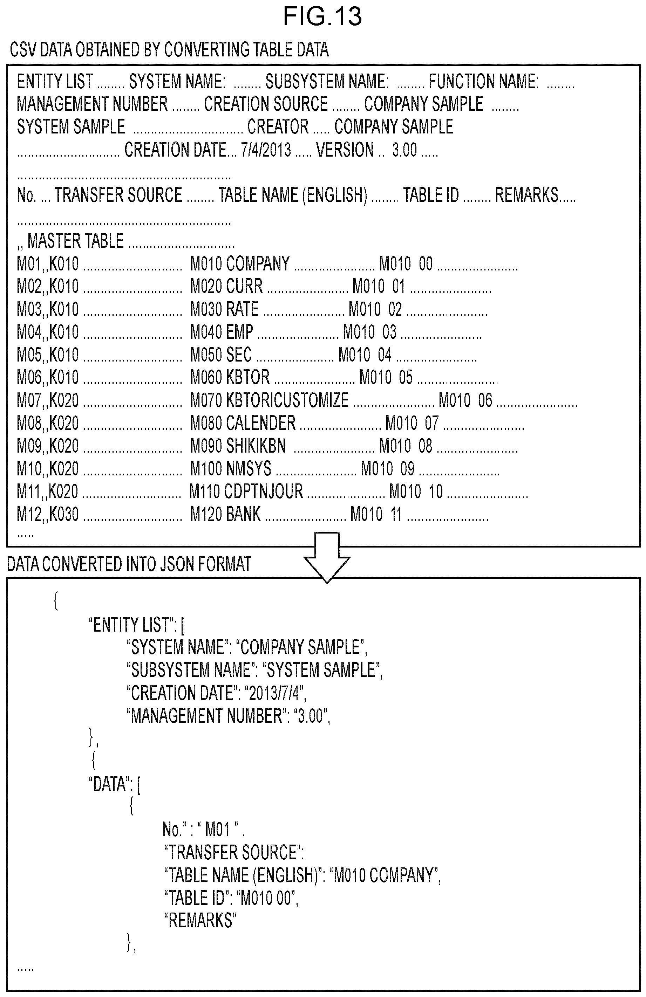

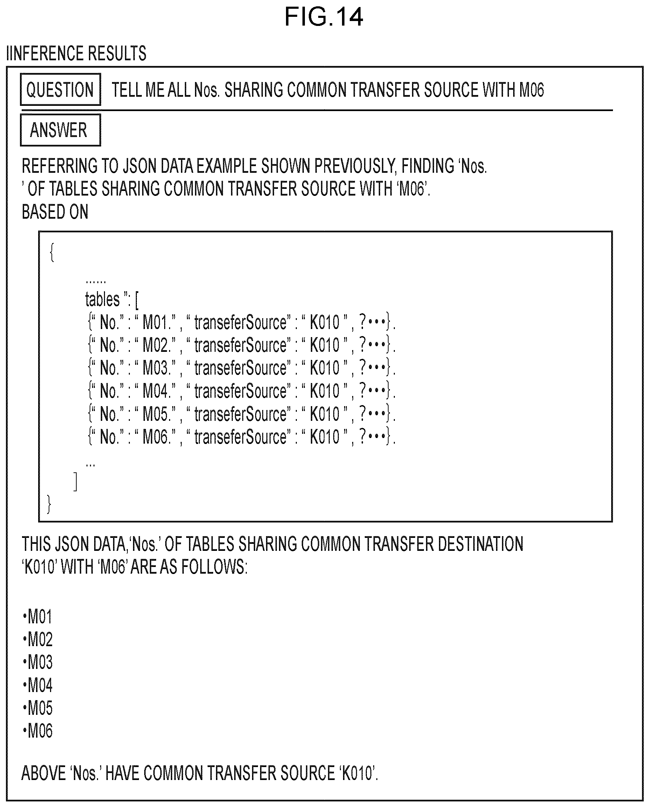

Furthermore, Fig. 13 illustrates an example of CSV data obtained by converting table data having a large amount of information of symbolic expression, as well as data obtained by converting the CSV data into the JSON format by LLM. In this case, the table data has been appropriately converted into the JSON format. Furthermore, Fig. 14 illustrates an inference result inferred by LLM using the data converted into the JSON format. In this inference result, a correct answer to the question is output.

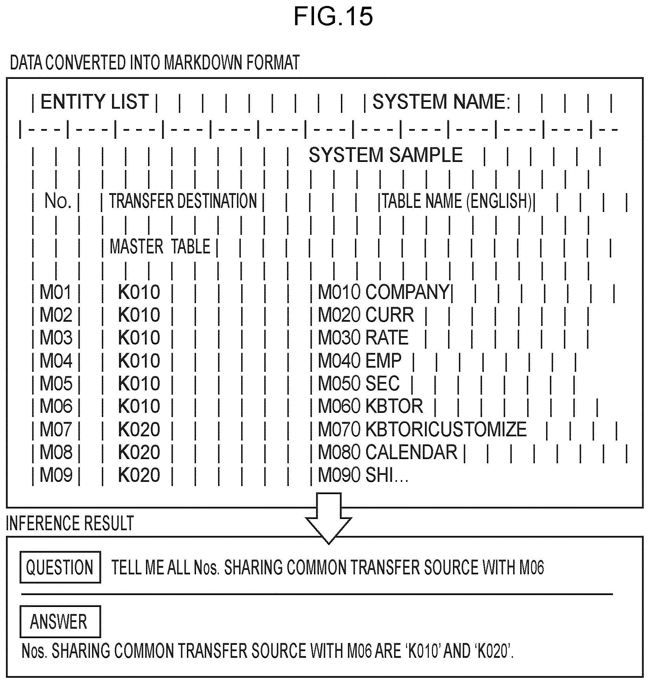

On the other hand, similarly to the upper diagram of Fig. 13, Fig. 15 illustrates an example of data obtained by converting CSV data obtained by converting table data having a large amount of information of symbolic expression into a markdown format and an inference result. In this case, the data converted into the markdown format is only data obtained by directly converting the CSV data into the pipe representation, and is not appropriately converted into the markdown format. Then, the inference result using the data in the markdown format is also incorrect for the question.

Note that, in each of the above embodiments, the markdown format and the JSON format have been described as examples in which the header and the value can be distinguished, but other formats may be applied as long as the header and the value are distinguishable.

In each of the above embodiments, the information processing program is stored (installed) in the storage device in advance, but the embodiment is not limited thereto. The program according to the disclosed technology may be provided in a form stored in a storage medium such as a CD-ROM, a DVD-ROM, or a USB memory.

### Reference Signs List

- 10, 210: Information processing apparatus
- 12: Assignment unit
- 213: Determination model construction unit
- 14, 214: Determination unit
- 16: Conversion unit
- 18: Execution unit
- 22: Assignment model
- 226: Determination model
- 30: Assignment model construction unit
- 32: Assignment model training data group
- 34: LLM construction unit
- 36: LLM training data group
- 40: Computer
- 41: CPU
- 42: GPU
- 43: Memory
- 44: Storage device
- 45: Input/output device
- 46: R/W device
- 47: Communication I/F
- 48: Bus
- 49: Storage medium
- 50, 250: Information processing program
- 52: Assignment process control command
- 253: Determination model construction process control command
- 54, 254: Determination process control command
- 56: Conversion process control command
- 58: Execution process control command
- 60, 260: Information storage area

## Claims

1. An information processing program for causing a computer to execute processing comprising:
converting table data in which a plurality of elements is represented in a table format into data in a format in which each of the plurality of elements is distinguishable as a header or a value; and
inputting the converted data to a large language model to cause the large language model to execute inference processing on the converted data.

2. The information processing program according to claim 1, wherein the processing of converting the table data includes determining a type of format for converting the table data based on at least one of a ratio at which an element of a natural sentence is included in the plurality of elements or a ratio at which an element of a symbolic expression is included in the plurality of elements.

3. The information processing program according to claim 2, wherein the processing of converting the table data includes converting the table data into a markdown format, in a case in which the ratio at which an element of a natural sentence is included is equal to or more than a predetermined first threshold, and converting the table data into a JSON format in a case in which the ratio at which an element of a natural sentence is included is less than the first threshold.

4. The information processing program according to claim 3, wherein determining the type of format for converting the table data includes assigning part of speech information to each lexeme included in the table data by performing a morphological analysis on the table data, converting the table data into a JSON format in a case in which a ratio of lexemes to which predetermined part of speech information is assigned as the part of speech information indicating the symbolic expression is equal to or more than the first threshold, and converting the table data into a markdown format in a case in which the ratio of the lexemes is less than the first threshold.

5. The information processing program according to claim 1, wherein:
an appearance distribution of a word in training data used for construction of the large language model is created in advance for each type of format for converting the table data, and
the processing of converting the table data includes determining a type of format for converting the table data based on a comparison between the appearance distribution of the word in the table data and the appearance distribution of a word for each type.

6. The information processing program according to any one of claims 1 to 5, causing the computer to execute assigning of an element indicating whether the element is a header or a value to each of the plurality of elements included in the table data.

7. An information processing method for causing a computer to execute processing comprising:
converting table data in which a plurality of elements is represented in a table format into data in a format in which each of the plurality of elements is distinguishable as a header or a value; and
inputting the converted data to a large language model to cause the large language model to execute inference processing on the converted data.

8. The information processing method according to claim 7, wherein the processing of converting the table data includes determining a type of format for converting the table data based on at least one of a ratio at which an element of a natural sentence is included in the plurality of elements or a ratio at which an element of a symbolic expression is included in the plurality of elements.

9. The information processing method according to claim 8, wherein the processing of converting the table data includes converting the table data into a markdown format in a case in which the ratio at which an element of a natural sentence is included is equal to or more than a predetermined first threshold, and converting the table data into a JSON format in a case in which the ratio at which an element of a natural sentence is included is less than the first threshold.

10. The information processing method according to claim 9, wherein determining the type of format for converting the table data includes assigning part of speech information to each lexeme included in the table data by performing a morphological analysis on the table data, converting the table data into a JSON format in a case in which a ratio of lexemes to which predetermined part of speech information is assigned as the part of speech information indicating the symbolic expression is equal to or more than the first threshold, and converting the table data into a markdown format in a case in which the ratio of the lexemes is less than the first threshold.

11. The information processing method according to claim 7, wherein:
an appearance distribution of a word in training data used for construction of the large language model is created in advance for each type of format for converting the table data, and
the processing of converting the table data includes determining a type of format for converting the table data based on a comparison between the appearance distribution of the word in the table data and the appearance distribution of a word for each type.

12. The information processing method according to any one of claims 7 to 11, wherein the computer executes assigning of an element indicating whether the element is a header or a value to each of the plurality of elements included in the table data.

13. An information processing apparatus comprising:
a conversion unit that converts table data in which a plurality of elements is represented in a table format into data in a format in which each of the plurality of elements is distinguishable as a header or a value; and
an execution unit that inputs the converted data to a large language model to cause the large language model to execute inference processing on the converted data.

14. The information processing apparatus according to claim 13, wherein the conversion unit determines a type of format for converting the table data based on at least one of a ratio at which an element of a natural sentence is included in the plurality of elements or a ratio at which an element of a symbolic expression is included in the plurality of elements.

15. The information processing apparatus according to claim 14, wherein the conversion unit converts the table data into a markdown format in a case in which the ratio at which an element of a natural sentence is included is equal to or more than a predetermined first threshold, and converts the table data into a JSON format in a case in which the ratio at which an element of a natural sentence is included is less than the first threshold.

16. The information processing apparatus according to claim 15, wherein the conversion unit assigns part of speech information to each lexeme included in the table data by performing a morphological analysis on the table data, converts the table data into a JSON format in a case in which a ratio of lexemes to which predetermined part of speech information is assigned as the part of speech information indicating the symbolic expression is equal to or more than the first threshold, and converts the table data into a markdown format in a case in which the ratio of the lexemes is less than the first threshold.

17. The information processing apparatus according to claim 13, further comprising:
a construction unit that creates an appearance distribution of a word in training data used for construction of the large language model for each type of format for converting the table data,
wherein the conversion unit determines a type of format for converting the table data based on a comparison between the appearance distribution of the word in the table data and the appearance distribution of a word for each type.

18. The information processing apparatus according to any one of claims 13 to 17, comprising an assignment unit that adds an element indicating whether the element is a header or a value to each of the plurality of elements included in the table data.

19. A non-transitory storage medium storing an information processing program for causing a computer to execute processing comprising:
converting table data in which a plurality of elements is represented in a table format into data in a format in which each of the plurality of elements is distinguishable as a header or a value; and
inputting the converted data to a large language model to cause the large language model to execute inference processing on the converted data.
